Europäisches Patentamt

European Patent Office

Office européen des brevets

(11) Veröffentlichungsnummer: **0 398 995 B1**

(12) **EUROPÄISCHE PATENTSCHRIFT**

(45) Veröffentlichungstag der Patentschrift: **23.06.93**

(51) Int. Cl.5: **H01J 35/00**, H01J 33/00, H01S 3/09, H01J 3/02

(21) Anmeldenummer: **89904542.1**

(22) Anmeldetag: **07.04.89**

(86) Internationale Anmeldenummer:
**PCT/EP89/00375**

(87) Internationale Veröffentlichungsnummer:
**WO 89/10003 (19.10.89 89/25)**

(54) **PLASMA-RÖNTGENRÖHRE, INSBESONDERE ZUR RÖNTGEN-VORIONISIERUNG VON GASLASERN, UND VERWENDUNG ALS ELEKTRONENKANONE.**

(30) Priorität: **08.04.88 DE 3811817**

(43) Veröffentlichungstag der Anmeldung:
**28.11.90 Patentblatt 90/48**

(45) Bekanntmachung des Hinweises auf die
Patenterteilung:
**23.06.93 Patentblatt 93/25**

(84) Benannte Vertragsstaaten:
**AT CH DE FR GB IT LI**

(56) Entgegenhaltungen:
**US-A- 3 588 565**
**US-A- 3 831 052**

**Applied Physics Letters, vol. 33, Nr. 11, 1 December 1978, American Institute of Physics, (New York, US), S. Sumida et al.: "X-ray-preionized high-pressure KrF laser", pages 913-915**

(73) Patentinhaber: **SIEMENS AKTIENGESELL-SCHAFT**
**Wittelsbacherplatz 2**
**W-8000 München 2(DE)**

(72) Erfinder: **FRIEDE, Dirk**
**Anna-Herrmann-Str. 40**
**W-8522 Herzogenaurach(DE)**
Erfinder: **BRÜCKNER, Volker**
**Dürrwiesenweg 11**
**W-8752 Mömbris-Rapp.(DE)**
Erfinder: **BAUMGARTL, Rudolf**
**Am Kapellenplatz 10**
**W-8755 Alzenau-Hörstein(DE)**
Erfinder: **CIRKEL, Hans-Jürgen**
**Holunderweg 8**
**W-8525 Uttenreuth(DE)**

Applied Physics B/Photophysics & Laser Chemistry, vol. B44, Nr. 1, September 1987, Springer-Verlag, (Berlin, DE), R.J.M. Bonnie et al.: "High pressure X-ray preionized TEMA-CO2 laser", pages 37-39

IEEE Journal of Ouantum Electronics, vol. OE-10, Nr. 2, February 1974, (New York, US), J.R. Bayless et al.: "The plasma-cathode electron gun", pages 213-218

## Beschreibung

Die Erfindung bezieht sich auf eine Plasma-Röntgenröhre zur Erzeugung eines Elektronenstrahls hoher Elektronenstromdichte und zur Umwandlung des Elektronenstrahls in Röntgenstrahlung an einem Röntgentarget der Plasma-Röntgenröhre. Eine bevorzugte Anwendung einer solchen Plasma-Röntgenröhre ist die Röntgen-Vorionisierung von Gaslasern. Diese und weitere vorteilhafte Verwendungen werden weiter unten noch näher erläutert.

Es ist bekannt, Elektronenkanonen als eine Baueinheit auszubilden, welche an eine durch elektrische Hochspannungsentladung gepumpte Laserkammer angebaut bzw. angeflanscht werden kann, wobei der Elektronenstrahl auf eine Folie trifft, welche das Volumen der Baueinheit der Elektronenkanone von demjenigen der Laserkammer abtrennt, und wobei die durch Auftreffen der Elektronen auf die dünne Metallfolie ausgelöste Bremsstrahlung zur Vorionisierung des Entladungsvolumens der Laserkammer dient, siehe Applied Physics Letter 34 (8), 15. April 1979, Seiten 505 - 508 (S. Lin und J.I. Levatter: "X-Ray Preionisation for Electric Discharge Lasers").

Die Erfindung geht von der folgenden Problemstellung aus: Bei der Erzeugung von Röntgenbremsstrahlung zur Vorionisierung von gepulsten Gasentladungen, z.B. im speziellen Fall eines Hochleistungslasers mit einem großen Entladungsvolumen von z.B. $450 \times 40 \times 56$ mm$^3$, kommt es auf eine sehr große Betriebszuverlässigkeit an. Es müssen auf einem großflächigen Strahlquerschnitt hohe Elektronenstromdichten erzeugt werden, um einen entsprechenden großflächigen Strahlquerschnitt bei der Brems- bzw. Röntgenstrahlung hervorzurufen. Die Röntgenvorionisierungseinheit muß bei hoher Zuverlässigkeit einen Pulsbetrieb mit hohen Wiederholraten gewährleisten, und die Intensität der vom Target emittierten Röntgenstrahlung muß ausreichen, um die erforderliche hohe Startelektronendichte für eine homogene Hochdruckglimmentladung im Lasergas zwischen den Elektroden bereitzustellen. Die Bereitstellung dieser Startelektronendichte muß in einem engen zeitlichen Fenster vor Zündung der Laser-Hauptentladung erfolgen. Feldemissionsröhren erfüllen diese Anforderungen insofern nicht, als ihre Lebensdauer bei Dauerbetrieb und hohen Wiederholraten begrenzt ist (Verrundung der schneidenförmigen Elektrode, dadurch stark schwankende Intensitätsverteilung der Röntgenstrahlung). Die thermische Belastung der Feldemissions-Kathode führt zu Sputterprozessen, die die erwähnte Verrundung der Schneide zur Folge haben.

Durch die US-A-3 970 892 ist eine Ionenplasma-Elektronenkanone bekannt, welche zur Erzeugung von Ladungsträgern in der Plasmakammer mit einem Zünddraht und einer Hohlkathodenentladung arbeitet. Hierbei ist jedoch die zur Hohlkathode gehörende Anode (Hohlkathodenanode) als isoliert montiertes Gitter ausgebildet, welches zusätzlich zu einem Beschleunigungsanodengitter den Querschnitt des Elektronenstrahls überdeckt. Diese Anordnung ist hinsichtlich der Elektronenstromdichte durch die Doppel-Gitteranordnung beschränkt. Außerdem verursacht die Doppel-Gitteranordnung aus Beschleunigungsgitter und Gitter für die Hohlkathodenanode einen relativ hohen elektrischen und mechanischen Aufwand.

Weiterhin ist durch die US-A-3 831 052 eine mit einem Ionenplasma innerhalb einer Hohlkathode arbeitende Elektronenstrahlerzeugungseinrichtung bekannt, die auch zu einer Ionenstrahlerzeugungseinrichtung abgewandelt werden und insbesondere zur Vorionisierung von Gaslasern, z.B. des TE-Typs verwendet werden kann. Auch hierbei ist im Weg des erzeugten Elektronenstrahls eine Doppelgitteranordnung vorgesehen, zum einen eine perforierte Anode und zum anderen ein dazu beabstandetes Beschleunigungsgitter. Wie bereits in Bezug auf die US-A-3 970 892 ausgeführt, ist die Doppel-Gitteranordnung elektrisch und mechanisch verhältnismäßig aufwendig; sie stellt auch bei größerer Durchlässigkeit der Gitter ein Hindernis für den Elektronenstrahl dar. Eng im Zusammenhang damit steht, daß in der Ausführung als Elektronenstrahl-Erzeugungseinrichtung die Targetfolie und die sie halternde Target-Haltewand auf hohem positivem Potential liegen (150 kV), und auf diesem hohen positiven Potential liegt auch das die Elektronenstrahl-Erzeugungseinrichtung umschließende Metallgehäuse.

Durch die Erfindung soll demgegenüber eine Plasma-Röntgenröhre zur Erzeugung eines Elektronenstrahls hoher Elektronenstromdichte und zur Umwandlung des Elektronenstrahls in Röntgenstrahlung an einem Röntgentarget der Plasma-Röntgenröhre geschaffen werden, bei welcher die aufwendige Doppelgitter-Anordnung vermieden ist und welche die Möglichkeit bietet, ein äußeres metallisches Gehäuse der Plasma-Röntgenröhre an Erdpotentiai anzuschließen. Insbesondere liegt die Aufgabe vor, eine Plasma-Röntgenröhre der eingangs definierten Art zu schaffen, welche eine im Vergleich zu Feldemissionsröhren wesentlich vergrößerte Lebensdauer aufweist und mit welcher hohe Elektronenstromdichten bei großflächigem Strahlquerschnitt insbesondere zur Röntgen-Vorionisierung von Gaslasern bereitgestellt werden können, und dies insbesondere für den Pulsbetrieb, wobei in kürzester Zeit ausreichend hohe Ladungsträgerdichten im Entladungsvolumen der Plasma-Röntgenröhre vorhanden sein sollen. Weiterhin soll die Plasma-Röntgenröhre nach der Erfindung für den Pulsbetrieb bei TE-Lasern (Transversally Excited) und hier vor allem für Excimer-Laser geeignet sein.

Erfindungsgemäß wird die gestellte Aufgabe bei einer Plasma-Röntgenröhre zur Erzeugung eines Elektronenstrahls hoher Elektronenstromdichte und zur Umwandlung des Elektronenstrahls in Röntgenstrahlung an einem Röntgentarget der Plasma-Röntgenröhre durch die Kombination nach Patentanspruch 1 gelöst, bestehend aus den folgenden Merkmalen:

a) einem gasdichten Gehäuse mit zwei einander mit Abstand gegenüberliegenden Haltewänden, einer Kathoden-Haltewand und einer zumindest an ihrer Innenseite metallischen Target-Haltewand und mit die Haltewände zum vollständigen Gehäuse komplettierenden seitlichen Verbindungswänden

b) einer Arbeitsgasfüllung im Gehäuse aus einem ionisierbaren Gas oder Gasgemisch, das unter Vakuumdruck steht,

c) einer als Hohlkathode ausgebildeten metallischen Wandanordnung im Inneren des Gehäuses, welche einen Plasmaraum teilweise umschließt und eine Kathodenbasis, versehen mit wenigstens zwei Wandvorsprüngen, derart aufweist, daß die Hohlkathode mit ihrer offenen Seite und ihrer Kathodenbasis der Target-Haltewand zugewandt ist, mit einem derart hohen negativen Hochspannungspotential an der Hohlkathode, daß diese eine Beschleunigungskathode für aus ihr durch Ionenbeschuß herausgeschlagene Sekundärelektronen bildet,

d) dem Röntgentarget, welches denjenigen Flächenbereich der Target-Haltewand gasdicht überdeckt, der in der Projektion der Kathodenbasis liegt und dem von der Hohlkathode ausgehenden Elektronenstrahl ausgesetzt ist,

e) einen Teil der Target-Haltewand bildenden zusätzlichen metallischen Plasmaraum-Begrenzungsmitteln, die im Verein mit der Hohlkathode den Plasmaraum zum übrigen Gehäuse-Innenraum abschirmen, wobei der Plasmaraum mit dem übrigen Gehäuse-Innenraum über den durch den Sicherheitsabstand Hohlkathode - Target-Haltewand bedingten Spalt kommuniziert, und

f) wenigstens einer in den Plasmaraum ragenden Zündelektrode in Form eines dünnen Drahtes, an den ein relativ zur Hohlkathode und zu den Metallinnenflächen des Gehäuses positives Potential zur Erzeugung einer die Glimmentladung im Plasmaraum einleitenden Startladungsträgerwolke anlegbar ist.

Vorteilhafte Weiterbildungen des Gegenstandes des Patentspruchs 1 sind in den Patentansprüchen 2 bis 16 angegeben.

Durch die US-A-3 588 565 ist zwar eine Plasmaröhre zur Erzeugung von Elektronenstrahlen mit den vorgenannten Merkmalen (a), (c) und (e) bekannt. Der angegebene Arbeitsdruck in diesem Dokument ist jedoch unklar (Bereich zwischen 5 x $10^{14}$ und 5 x $10^{12}$ mmHg, was einen Bereich von mehreren 1 bis 100 gigabar bedeuten würde). Dies würde nicht funktionieren, weil die Folie des Austrittsfensters diesem Druck nicht standhält. Interpretiert man diese Druckangaben als 5 x $10^{-14}$ bis 5 x $10^{-12}$ mmHg, dann käme man auf Druckwerte von etwa 6 x $10^{-14}$ bis 6 x $10^{-12}$ mbar. In diesem Höchstvakuum wären Plasma-Röntgenröhren nach der Erfindung nicht funktionsfähig, die in einem Druckbereich des Feinvakuums von etwa 1 bis $10^{-3}$ mbar arbeiten.

Durch das IEEE Journal of Quantum Electronics, Band QE-14, Nr. 2, vom Februar 1978, Seiten 126 bis 129, ist eine Zweikammer-Ionenröhre zur Erzeugung eines Elektronenstrahls hoher Strahldichte zum Zwecke der Vorionisierung von Excimer-Lasern bekannt, bei welchem darüber hinaus ein Zünddraht gemäß Merkmal (f) des vorstehend zitierten Patentanspruchs bekannt ist. Diese bekannte Zweikammer-Ionenröhre arbeitet indessen mit einem Beschleunigungsgitter zwischen Beschleunigungskathode auf der einen Seite und dem Zünddraht sowie der elektronenstrahldurchlässigen Folie auf der anderen Seite. Demgegenüber benötigt der Erfindungsgegenstand ein solches Beschleunigungsgitter nicht.

Gegenstand der Erfindung ist auch die bevorzugte Verwendung der Plasma-Röntgenröhre, wie sie in den Ansprüchen 1 bis 16 beschrieben wird, zur Röntgen-Vorionisierung eines Gaslasers. Als Gaslaser kommen insbesondere solche der TE-Bauart ( = Transversally Excited) in Frage, die auch unter der älteren Bezeichnung TEA-Laser ( = Transversally Excited Atmospheric Pressure) bekannt sind. Die letztgenannte Bauform ist die bevorzugte Bauform für Excimer-Laser. Gemäß Patentanspruch 18 besteht eine weitere vorteilhafte Verwendung des Erfindungsgegenstandes in der Röntgen-Vorionisierung eines solchen Excimer-Lasers. Solche im ultravioletten Bereich abstrahlenden Laser sind z.B. in dem Aufsatz "Rare-gas Halide Lasers" von J.J. Ewing in der Zeitschrift "Physics today" vom Mai 1978, Seiten 32 - 39, näher beschrieben. Excimere sind Moleküle kurzer Lebensdauer, die nur im angeregten Zustand existieren bzw. einen sehr schwach gebundenen bis dissoziierten Grundzustand haben. Die wichtigsten Excimere sind Edelgas-Halogene, wie z.B. ArF, KrF, XeCl. Durch Zünden einer schnellen Gasentladung werden durch Elektronenstoß in einem Gemisch aus Edelgas, dem etwas Fluor und ein Puffergas wie Helium beigemischt sind, die erwähnten Excimere (auch als Exciplexe bezeichnet) gebildet.

Beim Übergang in den Grundzustand wird kohärentes Licht emittiert. Da der Grundzustand sehr schnell (thermisch) entvölkert wird bzw. ein echter Grundzustand für das Molekül nicht existiert, ist es einfach, die für die Laseremission nötige Besetzungsinversion zu erreichen.

Bei der Verwendung der Plasma-Röntgenröhre nach der Erfindung zur Röntgen-Vorionisierung von Gaslasern wird die Plasma-Röntgenröhre insbesondere gepulst betrieben, weil mit ihr Röntgenpulse im Bereich zwischen 50 und 100 ns FWHM ( = Zeitdauer bei halbem Maximum) bei relativ kurzen Pulsanstiegs- und Pulsabklingzeiten erzeugbar sind. Zur Vorionisierung von $CO_2$-Dauerstrichlasern ist aber grundsätzlich auch ein Dauerbetrieb (cw) möglich.

Eine weitere vorteilhafte Verwendung unter geringfügiger Abwandlung des Erfindungsgegenstandes besteht darin, daß die Plasma-Röntgenröhre als Elektronenkanone bei entsprechend elektronenstrahldurchlässiger Gestaltung einer die Fensteröffnung in der Target-Haltewand abdeckenden, als Elektronenfenster dienenden Folie verwendet wird. Hierfür kommen z.B. Aluminiumfolien in Betracht, mit einer Folienstärke in der Größenordnung von 0,02 mm, die durch ein entsprechend hoch durchlässiges Stützgitter zweckmäßig abgestützt werden. Es kommen auch Kunststoff-Folien aus Poly-Imid in der Stärke von z.B. 0,01 mm in Betracht, derer beide Seiten metallisiert sind mit einem für Elektronen gut durchlässigen Metall, also z.B. Aluminium.

Die mit der Erfindung erzielbaren Vorteile sind vor allem in einer hohen Intensität der Röntgenbremsstrahlung und in einer guten Homogenität der Strahlungsverteilung - auch unter Berücksichtigung der Absorptionsverhältnisse im Röntgenfenster und im Lasergas - zu sehen, so daß eine gute Vorionisierungsdichte erreicht werden kann. Die Plasma-Röntgenröhre nach der Erfindung arbeitet nach dem Prinzip der Elektronenerzeugung durch Sekundärelektronenemission an der Hohlkathode. Diese Hohlkathode dient zugleich als Beschleunigungskathode; ihr vorgelagert ist ein Beschleunigungsraum der Länge d in Elektronenstrahlrichtung. Dem Beschleunigungsraum vorgelagert befindet sich der Plasmaraum. Das Plasma wird durch eine Gasentladung bei niedrigem Gasdruck, vorzugsweise von einigen Pa, erzeugt. Die Zündelektrode ist ein dünner Draht, der vorzugsweise in der Längsachse der Röntgenröhre aufgespannt ist. Die Vorgänge von Plasmaerzeugung, Ionenextraktion und Sekundärelektronenbeschleunigung finden in einer einzigen Kammer statt, d.h. Plasmaraum und Beschleunigungsraum sind nicht durch eine Doppelgitter- oder eine Einfachgitter-Anordnung voneinander getrennt; deshalb kann man die Plasma-Röntgenröhre nach der Erfindung auch als Einkammer-Ionenröhre bezeichnen, im Gegensatz zum Bauprinzip der Zweikammer-Ionenröhre.

Die Beschleunigungsspannung wird direkt an ein Plasma gelegt. Die Erzeugung des Niederdruckplasmas erfolgt durch Zündung einer Gasentladung an wenigstens einer Zündelektrode, wie erwähnt. Bei Anlegen einer positiven Spannung bildet sich um die Zündelektrode eine elektrisches Feld aus, unter dessen Einfluß aufgrund der Umgebungsstrahlung vorhandene Elektronen auf lange Wege gezwungen werden und so Gasatome ionisieren. Elektronenlawinen bilden sich aus und führen zur Zündung der Drahtentladung. Das so entstehende Niederdruckplasma hat die Eigenschaft, das starke Feld der Hohlkathode abzuschirmen. Das negative Elektrodenpotential zieht positive Ionen an und stößt Elektronen ab. In der Nähe der Innenseiten der Hohlkathode entsteht ein Bereich hoher Ionendichte. Die Raumladung der positiven Ionen neutralisiert das Feld der Hohlkathode und grenzt es vom Plasmaraum ab. Die Dichte des Ionenstromes zur Hohlkathode wird somit unabhängig von der angelegten Spannung. Die Anzahl der Ionen, welche durch das Raumladungsgebiet in das Beschleunigungsfeld der Beschleunigungskathode (Kathodenbasis) gelangen, wird durch die Stromdichte in der Drahtentladung festgelegt. Der Strom zur Hohlkathode gehorcht dem Raumladungsgesetz, so daß sich der Abstand zwischen der Beschleunigungskathode (Kathodenbasis) und Raumladungsgrenze aus dem Gesetz von Langmuir-Child, gültig für planparallele Elektrodenkonfiguration, ergibt:

$$d \sim \frac{V^{3/4}}{j_+^{1/2}}$$

$j_+$ = Ionenstromdichte
V = Potentialdifferenz über Beschleunigungsstrecke

In diesem Bereich d finden bei dieser Einkammer-Ionenröhre die Beschleunigungsvorgänge von Ionen und Sekundärelektronen statt. Man kann dabei die der Beschleunigungskathode zugewandte Raumladungsgrenze als eine virtuelle Anode ansehen.

Eine besondere Bedeutung kommt der Querschnittsform der Hohlkathode mit ihren wenigstens zwei Wandvorsprüngen und den gegenüberliegenden zusätzlichen Plasmaraum-Begrenzungsmitteln in Form von wenigstens zwei korrespondierenden Wandvorsprüngen zu. Sowohl die Wandvorsprünge der Hohlkathode als auch die mit ihnen vorzugsweise fluchtenden Wandteile der Target-Haltewand sind an ihren einander zugekehrten Flächen abgerundet, damit Feldstärkenüberhöhungen vermieden werden. Diese Wandvorsprünge bzw. Wandteile kann man auch als miteinander korrespondierende Elektroden bzw. Elektrodenwülste bezeichnen. Durch ihre Geometrie (Form und Anordnung) wird gewährleistet, daß das Niederdruckplasma im Raum zwischen den Elektoden eingeschlossen ist; eine Erhöhung der Ladungsträgerkonzentration zwischen der Hohlkathode und dem äußeren Metallgehäuse (welche die Wahrscheinlichkeit eines unerwünschten Überschlags erhöhen würde) wird dadurch verhindert. Durch die Geometrie ist weiterhin gewährleistet, daß der Feldverlauf in Nähe der Hohlkathode eine solche Gestalt annimmt, daß parasitäre Elektronenströme zu den metallischen Seitenwänden der Röntgenröhre vermieden werden.

Damit kann das Gehäuse allseitig metallisch ausgeführt und an Erdpotential angeschlossen werden, was einen wesentlichen Vorteil darstellt. Außer der Kostenreduktion aufgrund der einfacheren konstruktiven Ausführung zeichnet sich die Plasma-Röntgenröhre in Gestalt der Einkammer-Ionenröhre nach der Erfindung im Vergleich zur Bauform einer Zweikammer-Ionenröhre durch einen höheren Wirkungsgrad aus (Vermeidung von Strahlintensitätsverlusten an Gitter) und durch die Einsparung einer gesonderten Hochspannungsversorgung, weil eine Entladung zwischen einer Hohlkathodenanode und der Hohlkathode nicht vorgesehen ist.

Weitere Merkmale und Vorteile des Erfindungsgegenstandes sowie dessen Aufbau und Wirkungsweise werden im folgenden anhand eines in der Zeichnung dargestellten Ausführungsbeispiels erläutert. In der Zeichnung zeigen in schematischer, vereinfachter Darstellung:

FIG 1     einen Querschnitt durch eine Plasma-Röntgenröhre der Bauart "Einkammer-Ionenröhre" nach der Erfindung, welche z.B. eine Länge von einem halben Meter (senkrecht zur Papierebene) haben kann;

FIG 2     ein Diagramm, in welchem der Verlauf der Spannung U(Z) an der Zündelektrode und des Zündelektrodenstroms I(Z) über der Zeitachse t aufgetragen ist. Der Maßstab der Ordinatenachsen ist Spannung U in kV. Für den Zündelektrodenstrom ist kein gesonderter Maßstab vorgesehen; je nach Leistung der Einkammer-Ionenröhre kann er im Ampère bis Hundertampère-Bereich liegen;

FIG 3     in einem entsprechenden Diagramm den Verlauf der Zündspannung U(Z) und des Impulses der Beschleunigungsspannung U(B) über der Zeitachse t, die Spannung U ist auf den Ordinatenachsen wieder in kV angegeben;

FIG 4     in einem entsprechenden Diagramm (U in kV auf der Ordinatenachse, Abszissenachse als Zeitachse) den Verlauf der Beschleunigungsspannung U-(B) und der Röntgenamplitude U(X) bei Aussendung eines Röntgenpulses.

FIG 5     perspektivisch in Phantomdarstellung eine gemäß FIG 1 ausgebildete Plasma-Röntgenröhre, angebaut an die Laserkammer eines Gaslasers des TE-Typs, insbesondere eines Excimer-Lasers.

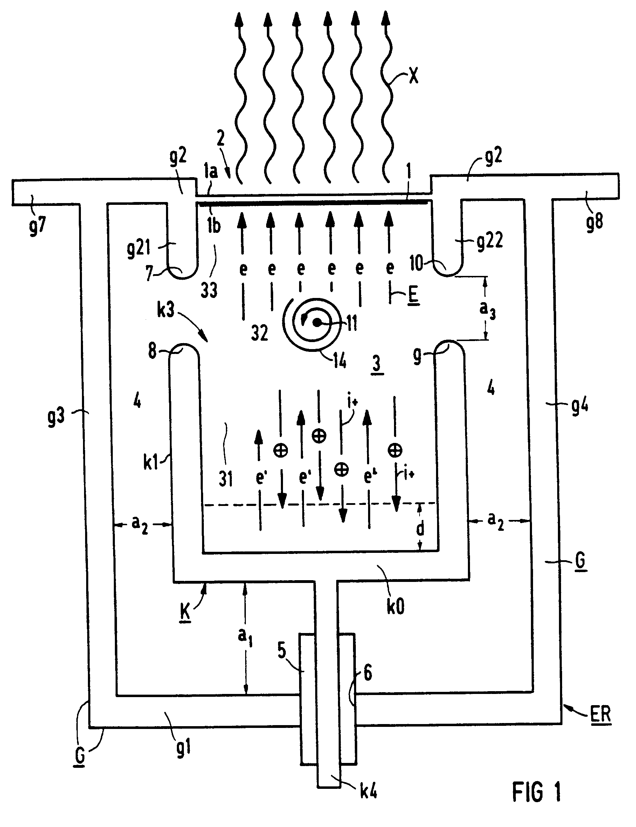

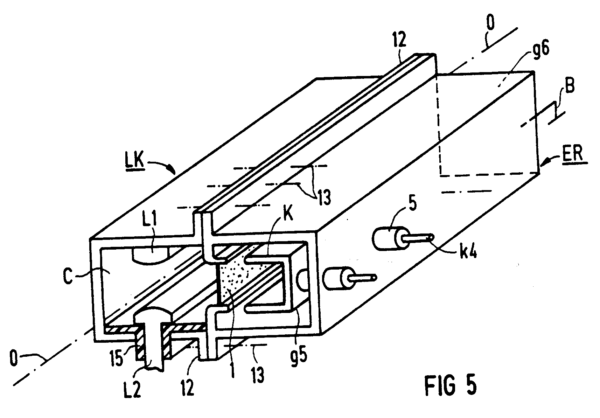

Die in Figuren 1 und 5 dargestellte Plasma-Röntgenröhre, die als Einkammer-Ionenröhre arbeitet, wird im folgenden vereinfacht als Röhre und ist als Ganzes mit ER bezeichnet. Sie dient zur Erzeugung eines Elektronenstrahls E, dessen Elektronenbahnen schematisch durch Pfeile e symbolisiert sind und zur Umwandlung des Elektronenstrahls E in Röntgenstrahlung X, deren einzelne Photonenbahnen bzw. Wellenzüge durch die gewellten Pfeile x symbolisiert sind. Die Umwandlung der Elektronenstrahlen E in die Röntgenstrahlung X erfolgt mittels des Röntgentargets 1, welches denjenigen Flächenbereich der Target-Haltewand g2 der Röhre ER gasdicht überdeckt, der in der Projektion der Kathodenbasis k0 der als Ganzes mit K bezeichneten Hohlkathode liegt und dem von dieser ausgehenden Elektronenstrahlen E ausgesetzt ist.

Die Röhre ER besteht aus einem gasdichten Gehäuse G mit zwei einander mit Abstand gegenüberliegenden Haltewänden g1 und g2, nämlich einer Kathoden-Haltewand g1 und der schon erwähnten Target-Haltewand g2. Das Gehäuse G weist ferner die Haltewände g1, g2 zum vollständigen Gehäuse komplettierende seitliche Verbindungswände g3 und g4 auf, ferner Stirnwände g5, g6, welch letztere aus Figur 5 hervorgehen. Das Gehäuse G ist bevorzugt allseitig metallisch ausgeführt und an Erdpotential angeschlossen, weil dies eine gute Abschirmung nach außen ergibt und den Isolieraufwand minimiert. Die Wände g1 bis g6 bestehen deshalb bevorzugt aus Ganzmetall, z.B. aus Aluminium. Sie können an ihren Innenseiten mit Nickel beschichtet sein. Grundsätzlich, wenn auch vom Standpunkt der Abschirmung nicht so günstig, wäre auch ein Gehäuse G aus Kunststoff, welches an seinen Innenseiten metallisiert ist, also mit entsprechenden Metallfolien ausgekleidet oder einer Metallbedampfung versehen ist. Dies gilt auch für die Target-Haltewand g2.

Die Folie für das Röntgentarget 1 überdeckt eine Fensteröffnung 2 in der Target-Haltewand g2 und ist mit dieser gasdicht verbunden. Die Folie bzw. das Röntgentarget besteht bevorzugt aus einem Material hoher Ordnungszahl Z, z.B. aus Gold oder Uran, oder eine Trägerfolie 1a aus gut strahlendurchlässigem Material, wie Aluminium, und ist mit dem genannten Metall hoher Ordnungszahl (Gold oder Uran) beschichtet (Beschichtung 1b). Wenn die Folie 1 bzw. Trägerfolie 1a sehr dünn sind, dann können sie durch ein Stützgitter, an welches sie sich anlegen, abgestützt werden (nicht dargestellt). Ein solches Röntgentarget 1 muß das im Inneren des Gehäuses G herrschende Vakuum gegenüber dem Atmosphärendruck oder - im Falle des Anbaus an einen Laser nach Figur 5 - gegenüber dem Laserinnendruck von einigen bar abdichten. Durch den Abstand der beiden wände g1-g2 wird die Tiefe des Innenraums des Gehäuses G definiert, durch den Abstand der Wände g3-g4 die Breite des Gehäuses und durch den Abstand der Stirnwände g5, g6 voneinander (siehe Figur 5) die Länge des Gehäuses G der Röhre ER. Die Target-Haltewand g2 ist an ihren beiden Längsseiten für den Fall ihres Anbaus an eine Laserkammer nach Figur 5 mit Flanschvorsprüngen g7 und g8 versehen.

Zur Röhre ER gehört weiterhin eine als Hohlkathode K ausgebildete metallische Wandanordnung im Inneren des Gehäuses G, welche einen Plasmaraum 3 teilweise umschließt und eine Kathodenbasis k0, versehen mit wenigstens zwei Wandvorsprüngen k1, k2, derart aufweist, daß die Hohlkathode K mit ihrer offenen Seite k3 und ihrer Kathodenbasis k0 der Target-Haltewand g2 zugewandt ist. Dabei ist an die Hohlkathode K ein derart hohes negatives Hochspannungspotential angeschlossen, im Ausführungsbeispiel 100 kV, daß sie eine Beschleunigungskathode für aus ihr durch Ionenbeschuß herausgeschlagene Sekundärelektronen e'bildet. Die Bahnen der Sekundärelektronen e', die sie bei ihrer Beschleunigung weg von der Hohlkathode K in Richtung auf das Röntgentarget 1 beschreiben, sind vereinfacht durch Pfeile symbolisiert, desgleichen die Bahnen der positiven Ionen i+, welche von dem negativen Potential der Hohlkathode K angezogen und in Richtung auf diese beschleunigt werden, auf welche sie auftreffen und von der sie dann die Sekundärelektronen e' herausschlagen. Die Hohlkathode K hat die Gestalt einer offenen Wanne, die auch an ihren Enden durch (nicht dargestellte) Kathodenstirnwände abgeschlossen ist; sie hat also eine Basiswand k0, zwei Längswände k1, k2 und die (nicht ersichtlichen) Stirnwände.

Hierzu ist der Plasmaraum 3, der sich zwischen Hohlkathode K und Röntgentarget 1 befindet, und der restliche Gehäuse-Innenraum bzw. Kammerraum, der sich jeweils zwischen den Wandvorsprüngen k1 bzw. k2 und den gegenüberliegenden Verbindungswänden g3 bzw. g4 befindet, mit einem Arbeitsgas unter einem Druck im Bereich des Feinvakuums (1 - $10^{-3}$ mbar) gefüllt.

Als Arbeitsgas wird bevorzugt Helium verwendet, jedoch sind auch $H_2$, Ne oder Ar als Arbeitsgase geeignet. Es ist auch möglich, mit wenigstens zwei oder mehr der genannten Gase als Gasgemisch zu arbeiten. Ein bevorzugter Druckbereich für das Arbeitsgas liegt zwischen 1 und 100 Pa, entsprechend $10^{-2}$ mbar bis 1 mbar. Beim Ausführungsbeispiel wurde mit einem Heliumdruck zwischen 2 und 10 Pa gearbeitet.

Zur elektrischen Versorgung und zur Halterung der Hohlkathode K an der Kathoden-Haltewand g1, jeweils unter Einhaltung von Sicherheitsabständen $a_1$, $a_2$, $a_3$, welche außerhalb des Überschlag-Abstandsbereiches liegen, zu den umgebenden Gehäusewänden g1 bzw. g3, g4 und g2 sind entsprechende Mittel in Form einer elektrisch isolierenden, gasdichten Hochspannungs-Leiterdurchführung 5 für einen der Hochspannungs- und Strom-Versorgung der Hohlkathode K dienenden elektrisch leitenden Kathodenträger k4 vorgesehen. Die Leiterdurchführung 5 umfaßt eine hohlzylindrische Muffe aus hochspannungsfestem Isoliermaterial, welche jeweils einen zylindrischen Schaft des Kathodenträgers k4 gasdicht umgibt und in eine entsprechende Bohrung 6 der Kathoden-Haltewand g1 gasdicht eingesetzt ist. Wie es aus Figur 5 näher erkennbar ist, sind die zylindrischen Schäfte für die Kathodenträger k4 über die Länge der Hohlkathode K mit gegenseitigem Abstand zueinander verteilt und jeweils gasdicht an entsprechenden Leiterdurchführungen 5 gehalten. Aus Figur 1 in Verbindung mit Figur 5 erkennt man auch die bevorzugte Ausführungsform des Gehäuses G, welches einen im wesentlichen rechteckigen Querschnitt hat und eine senkrecht zur Flucht Kathodenbasis k0 - Röntgentarget 1 langgestreckte Ausdehnung aufweist. In Anpassung an diese Gehäuseform hat gemäß der bevorzugten Ausführung die Hohlkathode K die Form einer langgestreckten geschlossenen Wanne mit U-förmigem Querschnitt, wobei die beiden Wandvorsprünge k1, k2 den Plasmateilraum 31 an drei Seiten umfassen und an den Enden wie erwähnt, noch 2 (nicht ersichtliche) Stirnwandteile vorgesehen sind.

Zur Begrenzung des Plasmaraums 3 sind zusätzliche Begrenzungsmittel g21, g22 vorgesehen, welche im dargestellten Ausführungsbeispiel als von der Target-Haltewand g2 in Richtung auf die beiden Wandvorsprünge k1, k2 der Hohlkathode K - unter Einhaltung des Sicherheitsabstandes $a_3$ - vorspringende metallische Elektrodenwandteile ausgebildet sind. Diese Elektrodenwandteile g21, g22 erstrecken sich ebenso wie die Wandvorsprünge k1, k2 im wesentlichen über die gesamte Länge des Kammerinnenraumes 3, 4 der Röhre ER; wie dargestellt fluchten diese Elektrodenwandteile g21, g22 paarweise mit den Wandvorsprüngen k1, k2 der Hohlkathode K, und an den einander zugekehrten Elektrodenflächen sind Abrundungen 7 bzw. 8 vorgesehen, welche der Abflachung von Feldstärkespitzen bzw. der Reduzierung entsprechender Feldstärkegradienten dienen und so unerwünschte Gleitfunkenentladungen vermeiden helfer. Die Elektrodenwandteile g21, g22 und nicht ersichtliche stirnseitige Wandteile umfassen an fünf Seiten den Plasmateilraum 33, und zwischen den Elektroden-Köpfen bzw. -Wülsten, die einander zugekehrt und mit 9 bzw. 10 bezeichnet sind, ergibt sich ein Elektrodenzwischenraum in Form eines weiteren Plasmateilraums 32, welcher von wenigstens einer Zündelektrode 11 in Form eines dünnen Drahtes durchdrungen ist. Der Durchmesser dieser drahtförmigen Zündelektrode 11 beträgt z.B. C,1 mm; er darf - um eine ausreichend große Feldstärke zu gewährleisten - jedoch auch nicht zu großgewählt werden. Sein Potential ist relativ zur Hohlkathode K positiv und beträgt z.B. 500 V bis zu einiger kV. Bei diesen werten (Durchmesser, Spannung) ist das Gesetz von Paschen zu berücksichtigen, genauso wie bei der Bemessung der Abstände $a_1$, $a_2$ und $a_3$. Dieses Gesetz beschreibt bekanntlich, daß die Zündspannung für einen Zündüberschlag zwischen zwei mit Abstand d einander gegenüberliegenden Elektroden von dem Produkt aus diesem Abstand d und dem Gasdruck p abhängt. Die Röhre ER gemäß Ausführungsbeispiel arbeitet in einem Bereich links vom sogenannten Paschen-Minimum, so daß also unerwünschte Zündüberschläge nicht stattfinden.

Die Elektrodenwandteile g21, g22 bilden also die zusätzlichen Plasmaraum-Begrenzungsmittel, die im Verein mit der Hohlkathode K den Plasmaraum 3 zum übrigen Gehäuse-Innenraum 4 abschirmen, wobei der Plasmaraum 3 mit dem übrigen Gehäuse-Innenraum 4 über den durch den Sicherheitsabstand $a_3$ bedingten Spalt kommuniziert. Auch die Hohlkathode K besteht bevorzugt aus Aluminium; sie kann auf ihren Innenseiten zusätzlich mit Nickel bzw. einer Nickelfolie ausgekleidet sein. Ebenso wie das Gehäuse G kann sie aber auch ganz aus Nickel bestehen. Der Sicherheitsabstand der Hohlkathode K muß naturgemäß auch gegenüber den Gehäusestirnwänden g5, g6 (siehe Figur 5) gegeben sein, was nicht näher dargestellt ist. Die Kathodenträger k4 können zylindrische Stifte oder Bolzen sein, welche in die Kathodenbasis k0 durch Einschrauben oder auf andere Weise eingelassen sind. Flanschverbindungsbolzen zum gasdichten Verbinden der Flanschvorsprünge g7, g8 mit entsprechenden Gegenflanschen 12 der entsprechend der Röhre ER langgestreckten Laserkammer LK sind in Figur 5 mit 13 bezeichnet.

Die dargestellte Röhre ER wird bevorzugt gepulst betrieben. Dies ergibt sich zwangsläufig, wenn sie zur Röntgen-Vorionisierung eines ebenfalls gepulst betriebenen Gaslasers verwendet wird.

Die Stromdichte des gepulsten Elektronenstrahls E, dessen Abbremsung am Röntgentarget 1 zur Emission der Röntgenstrahlung X führt, beträgt typisch 5 bis 10 A/cm$^2$ bei einer Spannung von 60 bis 120 kV im Maximum. Die Ausbildung einer Ladungsträgerlawine wird durch Anlegen eines Zündspannungsimpulses an die Zündelektrode 11 eingeleitet. Diese ist übrigens zwischen den beiden Stirnwänden g5, g6 mittels entsprechender hochspannungsfester Durchführungen eingespannt. Um diese drahtförmige Zündelektrode 11 bildet sich nun ein elektrisches Feld aus, unter dessen Einfluß aufgrund der Umgebungsstrahlung vorhandene Elektronen auf lange Wege in Form spiraliger Bahnen gezwungen werden und so beim Kollidieren mit Gasatomen diese ionisieren. Elektronenlawinen bilden sich aus und führen zur Zündung der Drahtentladung unter Bildung eines Niederdruckplasmas. Dieses besteht aus positiven Ionen und Elektronen in Form einer Raumladungswolke, wobei die Ladungsträgerbildung noch dadurch unterstützt wird, daß die positiven Ionen, welche auf die vorspringenden Elektrodenwülste 9, 10 auftreffen, aus diesen wieder Elektronen (Sekundärelektronen) herausschlagen, diese bewegen sich wieder auf die Zündelektode 11 in spiraligen Bahnen zu usw. Der Hauptanteil der positiven Ionen wird aus dem Niederdruckplasma in Richtung der größten Feldgradienten extrahiert, d.h., wie es die Pfeile i+ verdeutlichen, gegen die Hohlkathode K und in dieser Richtung beschleunigt. Wenn sie auf die Innenfläche der Hohlkathode K auftreffen, schlagen sie Sekundärelektronen heraus. Das Niederdruckplasma hat, wie eingangs bereits erwähnt, die Eigenschaft, das starke Feld der Hohlkathode K abzuschirmen. Das negative Elektrodenpotential dieser Kathodenbasis zieht die positiven Ionen an und stößt Elektronen ab. In der Nähe der Hohlkathode entsteht so ein Bereich hoher Ionendichte. Die Raumladung der positiven Ionen i+ neutralisiert das Feld der Hohlkathode K praktisch und grenzt es vom Plasmaraum ab. Die Dichte des Ionenstromes i+ zur Hohlkathode K wird praktisch unabhängig von der angelegten Spannung. Die Anzahl der Ionen, welche durch das Raumladungsgebiet in das Beschleunigungsfeld der Kathodenbasis k0 gelangen, wird durch die Stromdichte der Drahtentladung der Zündelektrode 11 festgelegt. Zur Verdeutlichung der weiteren Vorgänge ist der Abstand d beispielsweise und stark vereinfacht eingetragen, welcher zwischen der Hohlkathode K und der Raumladungsgrenze des Niederdruckplasmas besteht. (In Wirklichkeit handelt es sich um eine gekrümmte Linie bzw. eine gewölbte, nicht feststehende Grenzfläche). In diesem Bereich d findet die Beschleunigung der positiven Ionen i+ in Richtung auf die Hohlkathode K und der Sekundärelektronen e' weg von der Hohlkathode K statt. Die beschleunigten Sekundärelektronen e' haben eine solche Geschwindigkeit, daß sie durch das Niederdruckplasma im Plasmaraum 3 hindurchfliegen und dann als Elektronenstrahl E auf das Röntgentarget 1 auftreffen, von dessen Außenseite die Röntgenstrahlung X abgestrahlt wird. Intensität und spektrale Energieverteilung der Röntgen (Brems-)strahlung sind mit dem Ziel einer ausreichenden Vorionisierungsdichte im Lasergas gewählt, wenn die Röhre ER zu diesem Zweck benutzt wird.

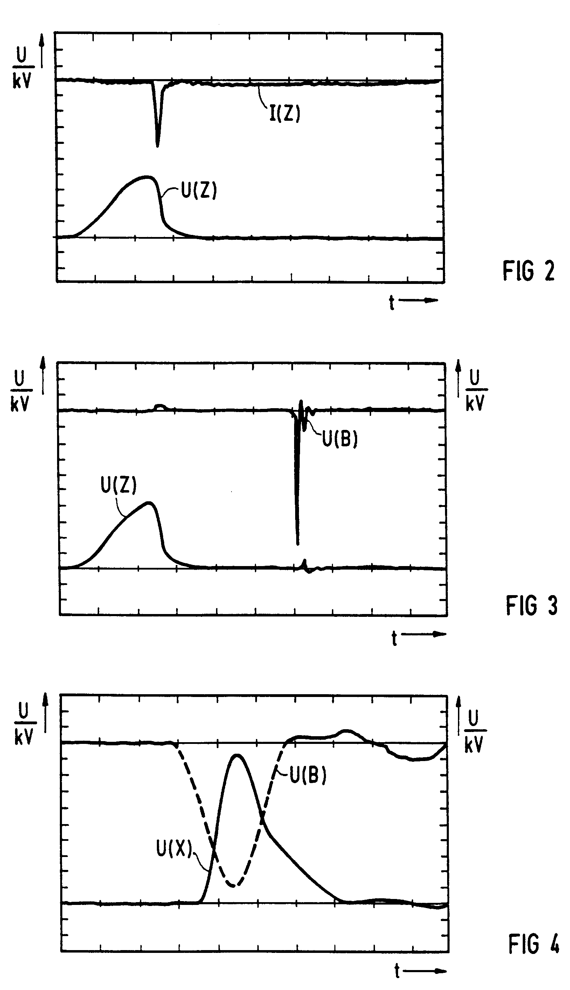

Figur 2 zeigt den Verlauf des Spannungsimpulses U(Z) und des Stromimpulses I(Z) an der Zündelektrode 11. Die Zündverzugszeit ist abhängig von der Feldstärke und dem Gasdruck.

Der zeitliche Anstand zwischen der Zündelektroden-Drahtentladung, siehe die Kurve U-(Z), und dem Anlegen der Beschleunigungsspannung U(B) kann über eine elektronische Steuerung frei vorgegeben werden. Der exakte Zeitpunkt für den Einsatz der Beschleunigungsspannung U(B) steht jedoch in engem Zusammenhang mit dem Zündzeitpunkt der Laserentladung, wenn die Röhre zu diesem Zweck verwendet wird. Bei einer Beschleungigungsspannung für den Elektronenstrahl E von typisch zwischen 60 und 120 kV beträgt die Halbwertsbreite des Röntgenpulses, siehe Röntgenamplitude U(X) in Figur 4, ca. 50 bis 100 ns FWHM ( = Zeitdauer bei halbem Maximum). Die Kurve U(B) stellt in Figur 4 wieder die Beschleunigungsspannung dar. Der gepulste Betrieb der Röhre ER ermöglicht die Bereitstellung der Vorionisierung innerhalb des vorgegebenen zeitlichen Fensters vor Zündung der Hauptentladung zwischen den Laserelektroden L1, L2 der Laserkammer LK nach Figur 5, an welche die Röhre ER gemäß einem bevorzugten Anwendungsfall angebaut ist. Der in Figur 5 dargestellte Laser ist bevorzugt ein Excimer-Laser der TE-Bauart, seine optische Achse ist mit o-o bezeichnet. Die die Länge des Laserresonators definierenden, an beiden Enden der Laserkavität C angeordneten Spiegel sind der Einfachheit halber nicht dargestellt.

Die Laserelektrode L1 liegt an Masse; die Erdung des metallischen Gehäuses für die Laserkammer LK und des damit verbundenen metallischen Gehäuses der Plasma-Röntgenröhre ER ist bei B angedeutet. Die Laserelektrode L2 ist die "hochliegende", d.h. an Hochspannungspotential angeschlossene, und deshalb zum Gehäuse der Laserkammer LK mittels einer hochspannungsfesten und gasdichten Hochspannungs-Isolierung 15 isoliert befestigt. Letztere ist sowohl als Durchführung als auch als Auskleidung ausgebildet.

Mit der Plasma-Röntgenröhre nach der Erfindung können die Amplituden des Elektronenstroms für den Elektronenstrahl und der Beschleunigungsspannung U(B) durch Variation des Gasdrucks und der Plasmadichte, wobei letztere von der Zündelektrodenstrom abhängt, gezielt beeinflußt werden. Entsprechendes gilt für die Variation des Abstandes ($a_3$) zwischen den einander zugewandten Elektrodenwandteilen 9, 10 und deren Abmessungen, um auf diese Weise den Röhrenwiderstand, der sich bei Beschleunigung der Ladungsträger ergibt, dem Innenwiderstand des jeweiligen HS-Generators anzupassen. - Das bevorzugte Elektrodenmaterial Aluminium zeichnet sich durch eine geringe Sputterneigung und ein hohes Sekundärelektronen-Emissionsvermögen aus. - Anwendungsbeispiele für die erläuterte Verwendung dar Plasma-Röntgenröhre als Elektronenkanone sind Elektronenstrahl-gepumpte Laser, Glühprozesse in der Halbleitertechnik und die Schaltertechnik mit pulsed power-Anwendungen.

Gemäß einer nicht dargestellten Ausführung (Abwandlung z.B. nach Figur 5) kann die Röhre auch oberhalb der geerdeten Laserelektrode L1 angebracht werden, die dann aus einem für Röntgenstrahlung durchlässigen Material bestehen muß, so daß die Röntgenstrahlung durch diese Elektrode in das Laserentladungsvolumen zwischen die Laserelektroden L1, L2 eintreten kann.

**Patentansprüche**

1. Plasma-Röntgenröhre (ER) zur Erzeugung eines Elektronenstrahls (EW) hoher Elektronenstromdichte und zur Umwandlung des Elektronenstrahls in Röntgenstrahlung (X) an einem Röntgentarget (1) der Plasma-Rontgenröhre, bestehend aus:

a) einem gasdichten Gehäuse (G) mit zwei einander mit Abstand gegenüberliegenden Haltewänden, einer Kathoden-Haltewand (g1) und einer zumindest an ihrer Innenseite metallischen Target-Haltewand (g2) und mit die Haltewände (g1, g2) zum vollständigen Gehäuse (G) komplettierenden seitlichen Verbindungswänden (g3 ... g6),

b) einer Arbeitsgasfüllung im Gehäuse (G) aus einem ionisierbaren Gas oder Gasgemisch, das unter Vakuumdruck steht,

c) einer als Hohlkathode (K) ausgebildeten metallischen Wandanordnung im Inneren des Gehäuses (G), welche einen Plasmaraum (3) teilweise umschließt und eine Kathodenbasis (k0), versehen mit wenigstens zwei Wandvorsprüngen (k1, k2), derart aufweist, daß die Hohlkathode (K) mit ihrer offenen Seite (k3) und ihrer Kathodenbasis (k0) der Target-Haltewand (g2) zugewandt ist, mit einem derart hohen negativen Hochspannungspotential an der Hohlkathode (K), daß diese eine Beschleunigungskathode für aus ihr durch Ionenbeschuß herausgeschlagene Sekundärelektronen (e') bildet,

d) dem Röntgentarget (1), welches denjenigen Flächenbereich der Target-Haltewand (g2) gasdicht überdeckt, der in der Projektion der Kathodenbasis (k0) liegt und dem von der Hohlkathode (K) ausgehenden Elektronenstrahl (E) ausgesetzt ist,

e) einen Teil der Target-Haltewand (g2) bildenden zusätzlichen metallischen Plasmaraum-Begrenzungsmitteln (g21, g22), die im Verein mit der Hohlkathode (K) den Plasmaraum (3) zum übrigen Gehäuse-Innenraum (4) abschirmen, wobei der Plasmaraum (3) mit dem übrigen Gehäuse-Innenraum (4) über den durch den Sicherheitsabstand ($a_3$) Hohlkathode - Target-Haltewand bedingten Spalt ($a_3$) kommuniziert, und

f) wenigstens einer in den Plasmaraum (3) ragenden Zündelektrode (11) in Form eines dünnen Drahtes, an den ein relativ zur Hohlkathode (K) und zu den Metallinnenflächen des Gehäuses (G) positives Potential zur Erzeugung einer die Glimmentladung im Plasmaraum (3) einleitenden Startlsdungsträgerwolke anlegbar ist.

2. Plasma-Röntgenröhre nach Anspruch 1, **dadurch gekennzeichnet,** daß Mittel zur elektrischen Versorgung und zur Halterung der Hohlkathode (K) an der Kathoden-Haltewand (g1) jeweils unter Einschaltung von Sicherheitsabständen ($a_1$, $a_2$, $a_3$), die außerhalb des Überschlag-Abstandsbereiches liegen, zu den umgebenden Gehäusewänden (g1, g3 g4, g2) vorgesehen sind und diese Mittel eine elektrisch isolierende, gasdichte Hochspannungs-Leiterdurchführung (5) für einen der Hochspannungs- und Stromversorgung der Hohlkathode (K) dienenden elektrisch leitenden Kathodenträger (k4) umfassen.

3. Plasma-Röntgenröhre nach Anspruch 1 oder 2, **dadurch gekennzeichnet,** daß die zusätzlichen Plasmaraum-Begrenzungsmittel wenigstens zwei, von der Target-Haltewand (g2) in Richtung auf die wenigstens zwei Wandvorsprünge (k1, k2) der Hohlkathode (K) - unter Einhaltung des Sicherheitsabstandes - vorspringende metallische Elektrodenwandteile (g21, g22) umfassen.

4. Plasma-Röntgenröhre nach Anspruch 3, **dadurch gekennzeichnet,** daß die Anodenwandteile (g21, g22) mit den Wandvorsprüngen (k1, k2) der Hohlkathode (K) jeweils fluchten.

5. Plasma-Röntgenröhre nach einem der Ansprüche 1 bis 4, **dadurch gekennzeichnet,** daß das Gehäuse (G allseitig metallisch und an Erdpotential (B) angeschlossen ist.

6. Plasma-Röntgenröhre nach einem der Ansprüche 1 bis 5, **dadurch gekennzeichnet,** daß das Gehäuse (G einen im wesentlichen rechteckigen Querschnitt hat und eine senkrecht zur Flucht Kathodenbasis (k0) - Röntgentarget (1) langgestreckte Ausdehnung aufweist und daß die Hohlkathode (K) in Anpassung an die Gehäuseform als langgestreckte Wanne U-förmigen Querschnitts ausgebildet ist.

7. Plasma-Röntgenröhre nach einem der Ansprüche 1 bis 6, **dadurch gekennzeichnet,** daß das Arbeitsgas unter einem Druck im Bereich des Feinvakuums (1 bis $10^{-3}$ mbar) steht.

8. Plasma-Röntgenröhre nach Anspruch 7, **dadurch gekenn zeichnet,** daß das Arbeitsgas unter einem Druck im Bereich von 1 bis 100 Pa, entsprechend $10^{-2}$ mbar bis 1 mbar, steht.

9. Plasma-Röntgenröhre nach einem der Ansprüche 1 bis 8, **gekennzeichnet durch** He als Arbeitsgas.

10. Plasma-Röntgenröhre nach einem der Ansprüche 1 bis 8, **gekennzeichnet durch** eines der folgenden ionisierbaren Arbeitsgase: $H_2$, Ne, Ar.

11. Plasma-Röntgenröhre nach Anspruch 9 oder 10, **gekennzeichnet durch** ein Gasgemisch als Arbeitsgas, welches mindestens zwei der vorgenannten Arbeitsgase He, $H_2$, Ne und Ar enthält.

12. Plasma-Röntgenröhre nach einem der Ansprüche 1 bis 11, **dadurch gekennzeichnet,** daß die Hohlkathode (K) und gegebenenfalls das Gehäuse (G) wenigstens zum Teil aus Aluminium bestehen.

13. Plasma-Röntgenröhre nach einem der Ansprüche 1 bis 11, **dadurch gekennzeichnet,** daß die Hohlkathode und gegebenenfalls das Gehäuse wenigstens zum Teil aus Nickel bestehen.

14. Plasma-Röntgenröhre nach Anspruch 12 oder 13, **dadurch gekennzeichnet,** daß die Hohlkathode (K) und gegebenenfalls das Gehäuse (G) aus Aluminiumwänden bestehen, die auf ihren Innenseiten mit Nickel beschichtet sind.

**15.** Plasma-Röntgenröhre nach einem der Ansprüche 1 bis 14, **dadurch gekennzeichnet,** daß eine Folie für das Röntgentarget eine Fensteröffnung in der Target-Haltewand überdeckt und mit der Target-Haltewand gasdicht verbunden ist sowie aus einem Material hoher Ordnungszahl Z, z.B. aus Gold oder Uran, beteht.

**16.** Plasma-Röntgenröhre nach einem der Ansprüche 1 bis 14, **dadurch gekennzeichnet,** daß eine Folie für das Röntgentarget (1) eine Fensteröffnung (2) in der Target-Haltewand (g2) überdeckt und mit der Target-Haltewand (g2) gasdicht verbunden ist sowie mit einem Metall hoher Ordnungszahl, z.B. Gold oder Uran, beschichtet ist.

**17.** Verwendung der Plasma-Röntgenröhre nach einem der Ansprüche 1 bis 16 zur Röntgen-Vorionisierung eines Gaslasers.

**18.** Verwendung nach Anspruch 17, zur Röntgen-Vorionisierung eines Excimer-Lasers.

**19.** Verwendung nach Anspruch 17 oder 18, **dadurch gekennzeichnet,** daß die Plasma-Röntgenröhre gepulst betrieben wird.

**20.** Verwendung der Plasma-Röntgenröhre nach einem der Ansprüche 1 bis 16 als Elektronenkanone bei entsprechend elektronenstrahldurchlässiger Gestaltung einer die Fensteröffnung in der Target-Haltewand abdeckenden, als Elektronenfenster dienenden Folie.

**Claims**

**1.** Plasma X-ray tube (ER) for generating an electron beam (EW) of high electron current density and for converting the electron beam into X-radiation (X) at an X-ray target (1) of the plasma X-ray tube, comprising:

a) a gas-tight housing (G) with two retaining walls lying opposite one another with a spacing, a cathode-retaining wall (g1) and a target-retaining wall (g2) metallic at least at its inner side and with lateral connection walls (g3 ... g6) completing the retaining walls (g1, g2) for the complete housing (G),

b) a working-gas filling in the housing (G) consisting of an ionizable gas or gas mixture which is under vacuum pressure,

c) a metallic wall arrangement constructed as hollow cathode (K) in the interior of the housing (G), which partially encloses a plasma space (3) and has a cathode base (kO), provided with at least two wall projections (k1, k2), such that the hollow cathode (K) with its open side (k3) and its cathode base (kO) faces the target-retaining wall (g2), with such a high negative high-voltage potential at the hollow cathode (K) that the latter forms an acceleration cathode for secondary electrons (e') knocked out of it by way of ion bombardment,

d) the X-ray target (1) which covers in a gas-tight manner that surface region of the target-retaining wall (g2) which lies in the projection of the cathode base (kO) and is exposed to the electron beam (E) emanating from the hollow cathode (K),

e) additional metallic plasma-space limiting means (g21, g22) forming a part of the target-retaining wall (g2), which means together with the hollow cathode (K) shield the plasma space (3) from the remaining housing interior (4), the plasma space (3) communicating with the remaining housing interior (4) via the gap (a_3) necessitated by the safety distance (a_3) between hollow cathode and target-retaining wall, and

f) at least one ignition electrode (11) projecting into the plasma space (3) in the form of a thin wire, to which there can be applied a potential which is positive relative to the hollow cathode (K) and to the metal inner faces of the housing (G) for generating an igniting charge carrier cloud initiating the glow discharge in the plasma space (3).

**2.** Plasma X-ray tube according to claim 1, characterized in that means are provided for the electrical supply and for holding the hollow cathode (K) on the cathode-retaining wall (g1) in each case with the inclusion of safety distances (a_1, a_2, a_3), which lie outside the flashover distance region, to the surrounding housing walls (g1, g3, g4, g2) and these means comprise an electrically insulating, gastight high-voltage conductor conduit (5) for an electro-conductive cathode carrier (k4) providing the high-voltage and current supply of the hollow cathode (K).

**3.** Plasma X-ray tube according to claim 1 or 2, characterized in that the additional plasma-space limiting means comprise at least two metallic electrode wall parts (g21, g22) projecting from the target-retaining wall (g2) in the direction of the at least two wall projections (k1, k2) of the hollow cathode (K) - while maintaining the safety distance.

**4.** Plasma X-ray tube according to claim 3, characterized in that the anode wall parts (g21, g22) are in each case in alignment with the wall projections (k1, k2) of the hollow cathode (K).

5. Plasma X-ray tube according to one of claims 1 to 4, characterized in that the housing (G) is metallic on all sides and is connected to earth potential (B).

6. Plasma X-ray tube according to one of claims 1 to 5, characterized in that the housing (G) has a substantially rectangular cross section and has an extent stretching perpendicularly to the alignment of cathode base (kO) and X-ray target (1), and in that the hollow cathode (K) is constructed as an extended trough of U-shaped cross-section matching the shape of the housing.

7. Plasma X-ray tube according to one of claims 1 to 6, characterized in that the working gas is under a pressure in the fine-vacuum region (1 to $10^{-3}$ mbar).

8. Plasma X-ray tube according to claim 7, characterized in that the working gas is under a pressure in the region of 1 to 100 Pa, corresponding to $10^{-2}$ mbar to 1 mbar.

9. Plasma X-ray tube according to one of claims 1 to 8, characterized by He as working gas.

10. Plasma X-ray tube according to one of claims 1 to 8, characterized by one of the following ionizable working gases: $H_2$, Ne, Ar.

11. Plasma X-ray tube according to claim 9 or 10, characterized by a gas mixture as working gas, which contains at least two of the aforementioned working gases He, $H_2$, Ne and Ar.

12. Plasma X-ray tube according to one of claims 1 to 11, characterized in that the hollow cathode (K) and perhaps the housing (G) consist at least in part of aluminium.

13. Plasma X-ray tube according to one of claims 1 to 11, characterized in that the hollow cathode and perhaps the housing consist at least in part of nickel.

14. Plasma X-ray tube according to claim 12 or 13, characterized in that the hollow cathode (K) and perhaps the housing (G) consist of aluminium walls which are coated on their inner sides with nickel.

15. Plasma X-ray tube according to one of claims 1 to 14, characterized in that a film for the X-ray target covers a window opening in the target-retaining wall and is connected in a gas-tight manner to the target-retaining wall and consists of a material of high ordinal number Z, for example gold or uranium.

16. Plasma X-ray tube according to one of claims 1 to 14, characterized in that a film for the X-ray target (1) covers a window opening (2) in the target-retaining wall (g2) and is connected in a gas-tight manner to the target-retaining wall (g2) and is coated with a metal of high ordinal number, for example gold or uranium.

17. Use of the plasma X-ray tube according to one of claims 1 to 16 for the X-ray preionizing of a gas laser.

18. Use according to claim 17, for the X-ray preionizing of an excimer laser.

19. Use according to claim 17 or 18, characterized in that the plasma X-ray tube is operated in a pulsed manner.

20. Use of the plasma X-ray tube according to one of claims 1 to 16 as an electron gun with suitably electron-beam-permeable formation of a film covering the window opening in the target-retaining wall and providing the electron window.

**Revendications**

1. Tube à rayons X à plasma (ER) destiné à produire un faisceau d'électrons (EW) présentant une quantité de courant d'électrons élevée et servant à convertir le faisceau d'électrons en un rayonnement X (X) au niveau d'une cible (1) de production des rayons X du tube à rayons X à plasma, constitué par :

a) un boîtier (G) étanche aux gaz comportant deux parois de support disposées en vis-à-vis à une distance réciproque, une paroi (g1) de support de la cathode et une paroi (g2) de support de la cible, paroi qui est métallique au moins sur sa face intérieure, et comportant des parois latérales de liaison (g3 ... g6), qui complètent les parois de support (g1, g2) pour former le boîtier complet (G),

b) un remplissage de gaz de travail situé dans le boîtier (G) et constitué par un gaz ou un mélange de gaz ionisable, qui est placé en dépression,

c) un dispositif formant paroi métallique, réalisé sous la forme d'une cathode creuse (K) et disposé à l'intérieur du boîtier (G) et qui entoure partiellement une chambre à plasma (3) et possède une base (k0) pour la cathode, pourvue d'au moins deux éléments de paroi saillants (k1, k2), de manière que le côté ouvert (k3) de la cathode creuse (K) et sa base (ko) sont tournés vers la paroi (g2) de support de la cible, avec application d'un potentiel de haute tension négatif élevé tel à la cathode creuse (K) que cette dernière forme une cathode accélératrice pour les électrons secondaires (e') qui sont éjectés par bombardement ionique,

d) la cible (1) de production des rayons X, qui recouvre, d'une manière étanche aux gaz, la zone superficielle de la paroi (g2) de support de la cible, qui est située dans la projection de la base (k0) de la cathode et est soumise au faisceau d'électrons (E) émis par la cathode creuse (K),

e) des moyens métalliques supplémentaires (g21, g22) de limitation de la chambre à plasma, qui forment une partie de la paroi (g2) de support de la cible et constituent, conjointement avec la cathode creuse (K), un écran pour la chambre à plasma (3) par rapport au reste de l'espace intérieur (4) du boîtier, la chambre à plasma (3) communiquant avec le reste de l'espace intérieur (4) du boîtier par l'intermédiaire d'une fente (a₃) conditionnée par la distance de sécurité (e₃) cathode creuse-paroi de support de la cible, et

f) au moins une électrode d'amorçage (11) qui pénètre dans la chambre à plasma (3) et se présente sous la forme d'un fil mince, auquel peut être appliqué un potentiel, qui est positif par rapport à la cathode creuse (K) et par rapport aux surfaces intérieures métalliques du boîtier (G) et sert à produire un nuage de porteurs de charges de départ, qui déclenche la décharge à effluve dans la chambre à plasma (3).

2. Tube à rayons X à plasma suivant la revendication 1, caractérisé par le fait qu'il est prévu des moyens pour réaliser l'alimentation électrique et supporter la cathode creuse (K) sur la paroi (g1) de support de la cathode, moyennant respectivement le maintien de distances de sécurité (a₁, a₂, a₃), qui sont situées à l'extérieur de la gamme de distances de claquage, par rapport aux parois enveloppantes (g1, g3, g4, g2) du boîtier et que ces moyens entourent une traversée électriquement isolante et étanche aux gaz (5) pour les conducteurs à haute tension pour un support électriquement conducteur (k4) de la cathode, qui est utilisé pour alimenter en haute tension et en courant la cathode creuse (K).

3. Tube à rayons X à plasma suivant la revendication 1 ou 2, caractérisé par le fait que les moyens supplémentaires de limitation de la chambre à plasma comprennent au moins deux éléments métalliques de paroi (g21, g22) d'électrodes, qui font saillie à partir de la paroi (g2) de support de la cible en direction des parties saillantes des au moins deux parties saillantes de paroi (k1, k2) de la cathode creuse (K) - moyennant le maintien de la distance de sécurité.

4. Tube à rayons X à plasma suivant la revendication 3, caractérisé par le fait que les éléments de paroi d'anode (g21, g22) sont alignés respectivement avec les parties saillantes de paroi (k1, k2) de la cathode creuse (K).

5. Tube à rayons X à plasma suivant l'une des revendications 1 à 4, caractérisé par le fait que le boîtier (G) est métallique de tous côtés et est raccordé au potentiel de terre (B).

6. Tube à rayons X à plasma suivant l'une des revendications 1 à 5, caractérisé par le fait que le boîtier (G) possède une section transversale sensiblement rectangulaire et sa direction longitudinale est perpendiculaire à l'alignement cathode de base (k0) - cible (1) de production des rayons X, et que la cathode creuse (K) est réalisée, d'une manière adaptée à la forme du boîtier, sous la forme d'une cuvette allongée possédant une section transversale en forme de U.

7. Tube à rayons X à plasma suivant l'une des revendications 1 à 6, caractérisé par le fait que le gaz de travail est placé à une pression inférieure à une pression de l'ordre d'un vide poussé (1 à 10⁻³ mbar).

8. Tube à rayons X à plasma suivant la revendication 7, caractérisé par le fait que le gaz de travail est placé à une pression dans la gamme de 1 à 100 Pa, ce qui correspond à 10⁻² mbar à 1 mbar.

9. Tube à rayons X à plasma suivant l'une des revendications 1 à 8, caractérisé par le fait qu'on utilise du He comme gaz de travail.

10. Tube à rayons X à plasma suivant l'une des revendications 1 à 8, caractérisé par l'un des gaz de travail ionisables suivants : $H_2$, Ne, Ar.

11. Tube à rayons X à plasma suivant la revendication 9 ou 10, caractérisé par le fait qu'on utilise comme gaz de travail un mélange de gaz, qui contient au moins deux des gaz de travail indiqués précédemment, He, $H_2$, Ne et Ar.

12. Tube à rayons X à plasma suivant l'une des revendications 1 à 11, caractérisé par le fait que la cathode creuse (K) et éventuellement le boîtier (G) sont constitués au moins en partie en aluminium.

13. Tube à rayons X à plasma suivant l'une des revendications 1 à 11, caractérisé par le fait que la cathode creuse et éventuellement le boîtier sont constitués au moins en partie en nickel.

14. Tube à rayons X à plasma suivant la revendication 12 ou 13, caractérisé par le fait que la cathode creuse (K) et éventuellement le boîtier (G) sont constitués de parois en aluminium, dont les faces intérieures sont recouvertes de nickel.

15. Tube à rayons X à plasma suivant l'une des revendications 1 à 14, caractérisé par le fait qu'une feuille pour la cible de production des rayons X recouvre une ouverture formant fenêtre dans la paroi de support de la cible, est raccordée d'une manière étanche aux gaz à cette paroi de support de la cible et est réalisée en un matériau possédant un numéro atomique Z élevé, par exemple de l'or ou de l'uranium.

16. Tube à rayons X à plasma suivant l'une des revendications 1 à 14, caractérisé par le fait qu'une feuille pour la cible (1) de production des rayons X recouvre une ouverture formant fenêtre (2) ménagée dans la paroi (g2) de support de la cible et est raccordée, de façon étanche au vide, à cette paroi (g2) de support de la cible et est recouverte par un métal possédant un numéro atomique élevé, par exemple de l'or ou de l'uranium.

17. Utilisation du tube à rayons X à plasma suivant l'une des revendications 1 à 16 pour la préionisation d'un laser à gaz, au moyen des rayons X.

18. Utilisation suivant la revendication 17 pour la préionisation d'un laser excimère au moyen des rayons X.

19. Utilisation suivant la revendication 17 ou 18, caractérisée par le fait que le tube à rayons X à plasma fonctionne d'une manière pulsée.

20. Utilisation du tube à rayons X à plasma suivant l'une des revendications 1 à 16 en tant que canon à électrons dans le cas d'une configuration correspondante, transparente pour le faisceau d'électrons, d'une feuille recouvrant l'ouverture formant fenêtre dans la paroi de support de la cible et utilisée comme fenêtre de passage d'électrons.

FIG 1

FIG 2

FIG 3

FIG 4

FIG 5